**Europäisches Patentamt**

**European Patent Office**

**Office européen des brevets**

(19)

(11) Numéro de publication: **0 133 604**
**B1**

(12) **FASCICULE DE BREVET EUROPÉEN**

(45) Date de publication du fascicule du brevet:
**05.11.86**

(51) Int. Cl.⁴: **F 24 H 1/43**

(21) Numéro de dépôt: **84401646.9**

(22) Date de dépôt: **06.08.84**

(54) Chaudière à échangeur en serpentin.

(30) Priorité: **12.08.83 FR 8313276**

(43) Date de publication de la demande:
**27.02.85 Bulletin 85/9**

(45) Mention de la délivrance du brevet:
**05.11.86 Bulletin 86/45**

(84) Etats contractants désignés:
**BE DE FR GB IT LU NL**

(56) Documents cité:
**DE-A-1 551 488**
**DE-C-902 186**
**FR-A-1 161 091**
**FR-A-2 295 395**

(73) Titulaire: **COMPAGNIE INTERNATIONALE DU
CHAUFFAGE, 157 Avenue Charles Floquet,
F-93158 Le Blanc Mesnil (FR)**

(72) Inventeur: **Perillaud, Alain, 7, rue des Gradins,
F-93100 Montreuil (FR)**
Inventeur: **Dervoet, André, Petit Chemin de la
Marinière, F-91370 Verrieres le Buisson (FR)**
Inventeur: **Beuchon, Michel, 19, avenue de Villiers,
F-75017 Paris (FR)**

(74) Mandataire: **Thevenet, Jean- Bruno, Cabinet BEAU
DE LOMENIE 55 rue d'Amsterdam, F-75008 Paris
(FR)**

LIBER, STOCKHOLM 1986

EP 0 133 604 B1

## Description

La présente invention concerne une chaudière, notamment une chaudière à condensation, comprenant un brûleur disposé selon l'axe d'un foyer de révolution et un échangeur tubulaire à serpentin délimitant le foyer et destiné à réchauffer de l'eau de chauffage central et/ou à produire de l'eau chaude sanitaire.

De telles chaudières sont déjà connues. Du fait que leur serpentin échangeur délimite le foyer, les spires du serpentin sont soumises directement à la flamme du brûleur et supportent d'importantes contraintes thermiques.

C'est pourquoi les serpentins des chaudières connues sont constitués par des tubes à paroi épaisse de manière à résister à la pression de l'eau et aux sollicitations thermiques alternées résultant des allumages et extinctions du brûleur.

Ces échangeurs sont onéreux et obèrent le prix de revient des chaudières considérées.

L'invention a notamment pour but de réduire le prix de revient d'une chaudière du type précédemment décrit tout en autorisant un échange thermique performant et le cas échéant une condensation aisée de la vapeur d'eau contenue dans les gaz de combustion.

Selon l'invention, dans une chaudière comprenant une enceinte étanche, un brûleur de combution disposé selon l'axe d'un foyer de révolution situé dans l'enceinte, et un échangeur tubulaire enroulé en serpentin à spires sensiblement jointives laissant passer entre elles les gaz de combustion, les spires de l'échangeur sont constituées par un tube onduleux flexible à paroi mince, le tube étant raidi par une armature de soutien de forme annulaire ou hélicoïdale pour empêcher la déformation des ondulations selon l'axe du tube et la déformation du tube radialement par rapport à l'axe du foyer.

Il convient de remarquer que le tube échangeur est dénué d'ailettes et que sa paroi ondulée est complètement en eau, ce qui assure un excellent échange thermique tant du côté de la flamme que du côté opposé, tout en excluant les problèmes de liaison thermique et de surchauffe d'ailettes.

La paroi mince du tube annelé ou onduleux, dont l'épaisseur est par exemple de l'ordre de quelques 1/10 de mm, est déterminée en association avec le choix du matériau du tube, par exemple de l'acier inoxydable, pour permettre une grande flexibilité et un cintrage aisé du serpentin tout en conservant une résistace suffisante à la pression de l'eau et aux sollicitations thermiques alternées.

La section des ondes du tube est de préférence déterminée de façon que la partie des ondes située du côté de l'axe du foyer présente en position cintrée une forme en omega, sans que ceci empêche une interpénétration des ondes dans leurs parties en regard appartenant à deux spires adjacentes, afin d'améliorer l'échange thermique.

L'armature de soutien peut être constituée par un panier ajouré extérieur au serpentin ou par un noyau plein ou tubulaire introduit à l'intérieur du tube; dans ce dernier cas, le noyau, lorsqu'il est tubulaire, sert avantageusement au passage de l'eau chaude sanitaire et il est de préférence placé à la corde intérieure du tube onduleux, celui-ci servant au passage de l'eau de chauffage central.

La description d'un exemple non limitatif qui suit en regard des dessins va permettre de mieux expliciter l'invention.

- la figure 1 représente en coupe verticale schématique une chaudière à gaz à condensation conforme à l'invention,
- la figure 2 montre schématiquemnt une variante de réalisation de la chaudière selon l'invention,
- la figure 3 représente en coupe horizontale les ondes du serpentin échangeur des figures 1 et 2,
- les figures 4 et 5 montrent respectivement en vue de dessus et en coupe par un plan diamétral du foyer un détail A de la fiqure 3,
- la figure 6 montre une variante de réalisation du fond de la chaudière,
- les figures 7 et 8 sont des coupes VII-VII et VIII-VIII de la figure 6.

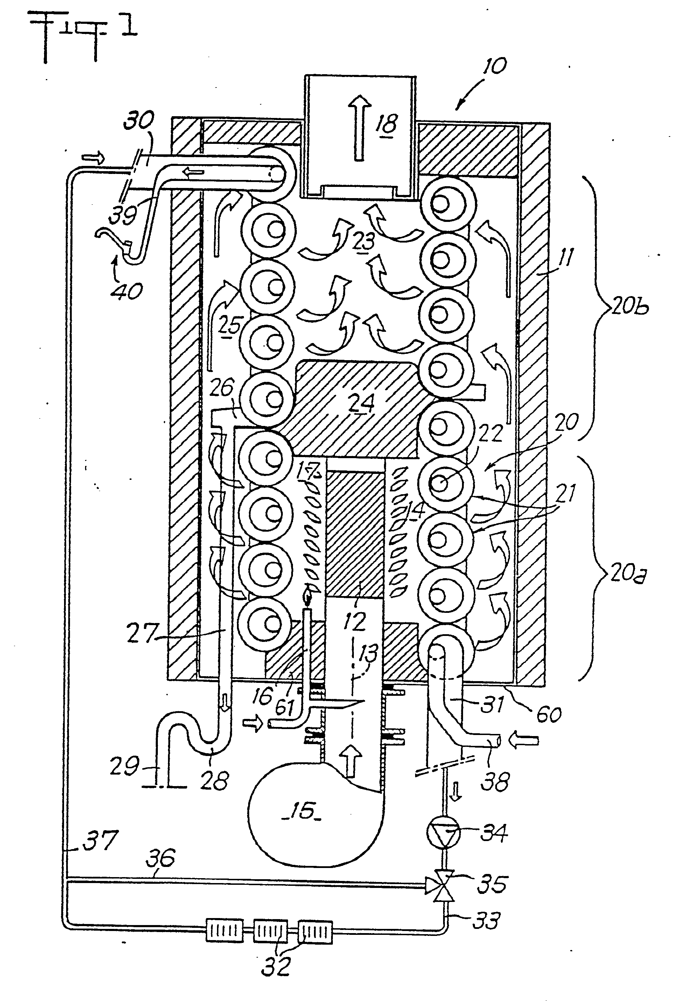

La chaudière illustrée sur la figure 1 est une chaudière à gaz mixte à condensation 10 comprenant une enceinte étanche 11 munie d'une isolation et un brûleur à gaz 12 disposé selon l'axe 13 d'un foyer 14.

Le brûleur 12 est cylindrique à prémélange de type connu et il lui est associé un ventilateur 15 et une veilleuse 16 qui ne seront pas plus amplement décrits; le brûleur est ceinturé en fonctionnement par des flammes radiales multiples 17. Les gaz brûlés quittent la chaudière par un raccordement d'évacuation supérieur 18.

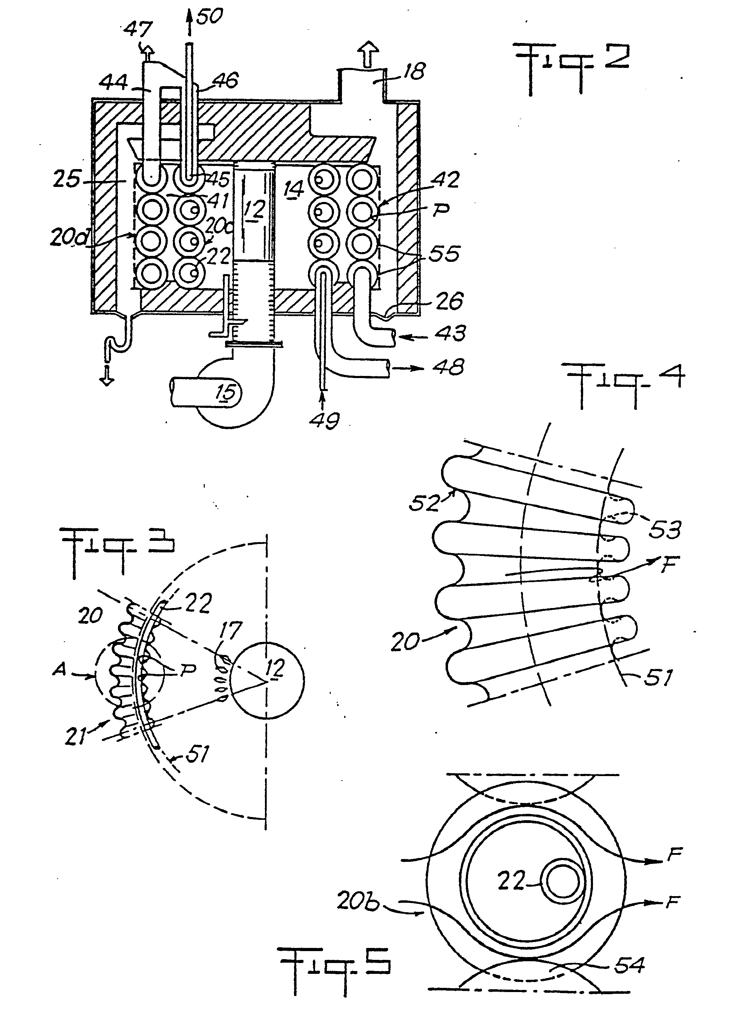

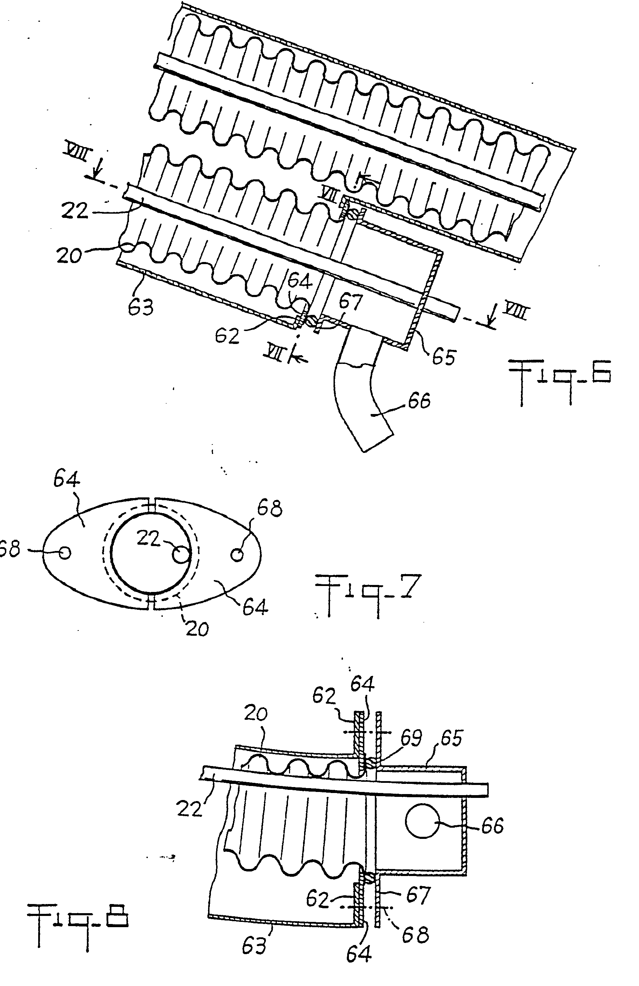

La chaudière présente un échangeur tubulaire 20 enroulé en serpentin à spires sensiblement jointives 21 laissant passer entre elles les gaz de combustion; selon l'invention, des spires 21 de l'échangeur 20 sont constituées par un tube vrillé ou de préférence annelé ou onduleux flexible à paroi mince dont l'épaisseur est de l'ordre de quelques 1/10 mm, par exemple de 0,2 mm, et qui sera plus amplement décrit en regard des figures 3 à 5.

Le tube 20 est raidi par une armature 22 de soutien de forme annulaire ou hélicoïdale dont les points de contact sont situés le long d'une courbe hélicoïdale, soit à l'extérieur du tube le long de la courbe enveloppe, soit à l'intérieur du tube le long de sa corde intérieure.

Dans le mode de réalisation de la figure 1, l'armature 22 est un noyau tubulaire lisse enfilé dans le tube 20 et servant au passage de l'eau chaude sanitaire tandis que le tube 20 sert au passage de l'eau de chauffage central.

L'échangeur 20 se décompose en deux parties, à savoir une partie inférieure 20a délimitant le foyer 14 et une partie supérieure 20b délimitant une chambre de sortie 23 en liaison directe avec le raccordement d'évacuation 18 et séparée du foyer 14 par une isolation 24.

Les deux parties 20a, 20b sont enroulées en une seule nappe continue de façon à déterminer entre elles-mêmes et l'enceinte 11 une chambre intermédiaire 25; comme l'indiquent les flèches de la figure 1, les gaz brûlés traversent radialement (par rapport à l'axe 13) vers l'extérieur des intervalles entre les ondulations des spires de la partie 20a et montent dans la chambre intermédiaire 25; ils passent ensuite radialement de la chambre 25 à la chambre de sortie 23 par les intervalles entre ondulations des spires adjacentes de la partie 20b.

La partie 20b de l'échangeur sert notamment à récupérer la chaleur de condensation des fumées; le condensat s'égoutte de spire en spire jusqu'à un collecteur annulaire 26 relié par un conduit de descente 27 et un siphon 28 à une évacuation 29.

Le tube 20 d'eau de chauffage central présente une entrée 30 et une sortie 31 celle-ci étant raccordée à des corps de chauffe 32 par une tuyauterie 33, comprenant une pompe de circulation 34 et une vanne dite "3 voies" 35 qui permet de conduire l'eau de chauffage, soit vers la tuyauterie 33, soit vers une dérivation 36 ractordée directement à une conduite de retour 37.

L'armature tubulaire 22 présente une entrée 38 et une sortie 39, celle-ci étant reliée à des robinets de puisage 40; l'eau sanitaire circule dans l'échangeur à contre-courant de l'eau de chauffage. L'eau sanitaire peut cependant circuler aussi dans le mêmes éléments que l'eau de chauffage.

Dans le mode de réalisation de la figure 2, on retrouve les mêmes éléments que dans la chaudière de la figure 1; toutefois, il convient de noter que l'échangeur 20 comprend à présent deux serpentins 20c, 20d concentriques et interconnectés, ménageant entre eux un intervalle anulaire 41; le serpentin intérieur 20c est raidi par une armature tubulaire d'eau sanitaire 22, tandis que le serpentin extérieur flexible 20d est soutenu par un panier ajouré 42 dont les points de contact P sont situés sur la courbe hélicoïdale enveloppe 55.

L'eau de chauffage entre dans le serpentin extérieur 20d en 43 et en sort en 44 pour entrer en 45, via un coude 46 à dégazeur-purgeur 47, dans le serpentin intérieur 20c dont elle ressort en 48. L'eau sanitaire circule à contre-courant, par exemple dans le seul serpentin intérieur où elle entre en 49 et dont elle sort en 50.

La figures 3 montre en coupe horizontale une partie de spire 21 de l'échangeur 20 conforme à l'invention; l'armature tubulaire 22 est disposée, comme l'indiquent également les figures 1 et 2, de façon que ses points d'appui P sur le tube 21 se trouvent le long d'une courbe hélicoïdale ou corde intérieure 51, pour empêcher la déformation radiale du tube onduleux et celle des ondulations. Cette disposition du tube 22 permet d'augmenter la capacité d'absorption thermique des serpentins 20a (fig.1) et 2Cc (fig.2) de l'échangeur du côté des flammes 17.

Le tube onduleux 20 présente des ondes 52 telles que leur partie située du côté de l'axe 13 du foyer présente en position cintrée une forne en omega 53 et qu'il y ait interpénétration des ondes (fig. 5) dans leurs parties 54 en regard appartenant à deux spires adjacentes.

Dans le serpentin de condensation 20b de la fig.1, le profil en omega 53 oblige les gaz brûlés à lécher une plus grande partie de la section aval du tube, comme le montrent les flèches F des figures 4 et 5.

La chaudière représentée fonctionne de la manière suivante: quand le brûleur est mis en oeuvre, les gaz de combustion suivent le parcours précédemment explicité, tandis que l'eau de chauffage et/ou l'eau sanitaire circulent comme déjà décrit. Le tube onduleux 20 qui tend à se dilater sous l'effet des sollicitations thermiques, en particulier en ce qui concerne les serpentins 20a, 20c situés au voisinage des flammes 17, reste maintenu en position malgré sa flexibilité grâce à la présence de l'amature sur laguelle il s'arc-boute le long d'une génératrice hélicoïdale.

Il va de soi qu'on peut apporter aux modes de réalisation décrits des modifications sans pour autant sortir du cadre de l'invention. En particulier, la chaudière peut présenter un brûleur à fuel, par exemple du type à coupelle rotative, et peut être une chaudière à eau de chauffage seule ou à eau chaude sanitaire seule, l'armature pouvant être constituée dans ce cas par une tige hélicoïdale pleine enfilée dans le tube onduleux 20 ou par un panier ajouré du type illustré fig.2.

Dans le cas de la figure 2, l'armature tubulaire peut être disposée dans les deux serpentins. Plusieurs tiges ou tubes d'armature peuvent être substitués au tube unique 22. Le tube onduleux, de préférence en acier inoxydable à paroi mince, peut être en tout autre matériau bon conducteur de la chaleur, résistant à la corrosion et se prêtant à une réalisation à paroi mince, flexible et facile à cintrer.

Dans le mode de réalisation de la figure 1, le fond métallique 60 de la chaudière supporte une forme réfractaire 61, destinée à soutenir la spire inférieure du serpentin 20, qui peut finir par se dégrader sous l'action des condensations permanentes. Par ailleurs, le collecteur du circuit primaire, qui termine le serpentin 20, se trouve dans la partie chaude de la chaudière: il est pour cela réalisé en acier inoxydable et soudé par des soudures spéciales au tube du serpentin. A fin, la présence du collecteur à 1 intérieur de la chaudière exige deux traversées du fond 60, pour la sortie 31 et l'entrée 38.

Les figures 6 à 8 montrent un mode de réalisation plus avantageux du fond de chaudière.

Selon ce mode de réalisation, le fond est formé, par exemple par emboutissage, de manière à présenter une paroi 62 orientée perpendiculairement à la direction d'enroulement hélicoïdal de la spire inférieure du serpentin au niveau de sa section extrême, tandis que le reste 63 du fond est conformé pour soutenir la spire inférieure.

La paroi 62 comporte un passage de dimensions suffisantes pour laisser passer le tube onduleux 20.

Le tube onduleux 20 dépasse hors de la paroi 62 de la distance nécessaire pour pouvoir engager deux demi-brides 64 autour du creux de la dernière onde du tube 20. Le collecteur 65 de circuit primaire, avec sa sortie 66, comporte une bride annulaire 67 assujettie à la paroi 62 par des moyens de fixation 68 qui traversent et maintiennent également les deux demi-brides 64. Un joint élastique 69 est interpose pour garantir l'étanchéité.

Cette disposition se révèle avantageuse en ce que, le collecteur 65 étant hors de la chaudière, elle permet de le réaliser en acier ordinaire, de s'affranchir de toute soudure au profit de fixations amovibles facilitant la fabrication et les montages et démontages éventuels des tubes 21 et 22. Il convient de noter que l'orientation de l'ouverture de la paroi 62 respecte la courbure hélicoïdale du serpentin et permet donc de rentrer ou sortir celui-ci de la chaudière par simple "vissage" ou "dévissage" du serpentin. La même remarque s'applique au tube de soutien 22.

## Revendications

1. Chaudière comprenant une enceinte étanche, un brûleur de combustible (12) disposé selon l'axe (13) d'un foyer de révolution (14) situé dans l'enceinte, et un échangeur tubulaire enroulé en serpentin à spires (21) sensiblement jointives laissant passer entre elles les gaz de combustion, caractérisée en ce que les spires (21) de l'échangeur sont constituées par un tube onduleux flexible (20) à paroi mince, le tube étant raidi par une armature de soutien (22) de forme annulaire ou hélicoidale pour empêcher la déformation des ondulations (52) selon l'axe du tube (20) et la déformation de celui-ci radialement par rapport à l'axe du foyer.

2. Chaudière selon la revendication 1, caractérisée en ce que le tube onduleux (20) présente une épaisseur de paroi de quelques dixiémes de millimètre.

3. Chaudière selon l'une quelconque des revendications 1 ou 2, caractérisée en ce que les points (P) de l'armature de soutien (22) qui sont au contact du tube onduleux (20) sont situés extérieurement au tube le long de la courbe enveloppe (55) de celui-ci.

4. Chaudière selon l'une quelconque des revendications 1 ou 2, caractérisée en ce que l'armature de soutien (22) du tube onduleux est constituée par un noyau hélicoïdal (22) plein ou tubulaire intérieur au tube onduleux (20).

5. Chaudière selon la revendication 4, caractérisée en ce 5 que les points (P) du noyau de soutien qui sont au contact du tube onduleux (20) sont situés à l'intérieur du tube le long de sa corde intérieure (51).

6. Chaudière selon l'une quelconque des revendications 4 ou 5, caractérisée en ce que le noyau hélicoïdal (22) de soutien est un tube destiné au passage de l'eau chaude sanitaire tandis que le tube onduleux (20) est destiné à être parcouru par de l'eau de chauffage central.

7. Chaudière selon l'une quelconque des revendications 1 à 6, caractérisée en ce que la section des ondes (52) du tube (20) est déterminée de façon que leur partie située du côté du foyer présente en position cintrée une forme en omega (53).

8. Chaudière selon l'une quelconque des revendications 1 à 7, caractérisée en ce qu'elle comprend un fond conformé de manière à présenter une paroi de soutien (63) de la spire inférieure du serpentin et une ouverture pratiquée perpendiculairement (62) à la direction d'enroulement hélicoïdal du serpentin au niveau de sa section extrême.

9. Chaudière selon la revendication 8, caractérisée en ce que le serpentin se termine au delà de l'ouverture du fond par un collecteur (65) qui lui est fixé par des moyens amovibles (64, 67, 68).

## Patentansprüche

1. Kessel mit einem dichten Mantel, einem Brennstoff-Brenner (12), der längs der Achse (13) eines im Mantel befindlichen rotationssymmetrischen Feuerraums (14) angeordnet ist, und einem rohrförmigen Austauscher, der als Schlange mit im wesentlichen aneinanderliegenden Windungen (21) gewickelt ist, die dazwischen die Verbrennungsgase hindurchtreten lassen, dadurch gekennzeichnet, daß die Windungen (21) des Austauschers durch ein biegsames wellenförmiges Rohr (20) mit dünner Wand gebildet sind, wobei das Rohr durch eine ringförmige oder schraubenförmige Stützarmierung (22) versteift ist, um die Verformungen der Wellungen (52) längs der Achse des Rohrs (20) und dessen Verformung radial zur Achse des Feuerraums zu verhindern.

2. Kessel nach Anspruch 1, dadurch gekennzeichnet, daß das wellenförmige Rohr (20) eine Wanddicke von einigen zehn Millimetern hat.

3. Kessel nach einem der Ansprüche 1 oder 2, dadurch gekennzeichnet, daß die in Berührung mit dem wellenförmigen Rohr (20) befindlichen Punkte P der Stützarmierung (22) sich außerhalb am Mantelrohr längs dessen Mantelkurve (55) befinden.

4. Kessel nach einem der Ansprüche 1 oder 2, dadurch gekennzeichnet, daß die Stützarmierung (22) des wellenförmigen Rohrs durch einen innerhalb des wellenförmigen Rohrs (20) angeordneten massiven oder rohrförmigen schraubenförmigen Kern (22) gebildet ist.

5. Kessel nach Anspruch 4, dadurch gekennzeichnet, daß die in Berührung mit dem wellenförmigen Rohr (20) befindlichen Punkte P des Stützkerns sich innerhalb des Rohrs längs dessen innerer Sehne (51) befinden.

6. Kessel nach einem der Ansprüche 4 oder 5, dadurch gekennzeichnet, daß der schraubenförmige Stützkern (22) ein Rohr ist, das für einen Durchtritt von heißem Brauchwasser bestimmt ist, während das wellenförmige Rohr (20) vom Zentralheizungswasser durchströmt werden soll.

7. Kessel nach einem der Ansprüche 1-6, dadurch gekennzeichnet, daß der Querschnitt der Wellen (52) des Rohrs (20) derart gegeben ist, daß ihr auf der Seite des Feuerraums gelegener Teil in der gebogenen Stellung die Form eines Omegas (53) hat.

8. Kessel nach einem der Ansprüche 1-7, dadurch gekennzeichnet, daß er einen Boden enthält, der so ausgebildet ist, daß er eine Stützwand (63) für die untere Windung der Schlange und eine Öffnung aufweist, die senkrecht (62) zur Richtung der schraubenförmigen Wicklung der Schlange in Höhe von deren Endquerschnitt ausgebildet ist.

9. Kessel nach Anspruch 8, dadurch gekennzeichnet, daß die Schlange jenseits der Öffnung des Bodens mit einem Sammelbehälter (65) endet, der an ihr durch abnehmbare Mittel (64, 67, 68) befestigt ist.

**Claims**

1. Boiler comprising a tight enclosure, a fuel (12) burner placed in the axis (13) of a revolution (14) generated furnace situated inside the enclosure, and a tubular exchanger wound as a serpentine with substantially jointed spires (21) allowing the ccmbustion gas to flow between them, characterized in that the spires (21) of the exchanger are constituted by a flexible wavy tube (20) with thin wall, the tube being stiffened by a supporting reinforcement (22) of annular or helical shape to prevent deformation of the undulations (52) in the axis of the tube (20) and deformation thereof radially with respect to the furnace axis.

2. Boiler according to claim 1, characterized in that the wall of the wavy tube (20) is about a few tenths of millimeter thick.

3. Boiler according to any one of claims 1 or 2, characterized in that the points (P) of the supporting reinforcement (22) in contact with the wavy tube (20) are situated outside the tube along the curved jacket (55) thereof.

4. Boiler according to any one of claims 1 or 2, characterized in that the supporting reinforcement (22) of the wavy tube is constituted by a solid or tubular helical core (22) internal to the wavy tube (20).

5. Boiler according to claim 4, characterized in that the points (P) of the supporting core in contact with the wavy tube (20) are situated inside the tube along its internal chord (51).

6. Boiler according to any one of claims 4 or 5, characterized in that the supporting helical core (22) is a tube designed for the passage of sanitary hot water whereas the wavy tube (20) is designed to be flowed through by the central heating water.

7. Boiler according to any one of claims 1 to 6, characterized in that the section of the undulations (52) of the tube (20) is determined so that their part situa-ted on the furnace side is, in bent position, omega (53) shaped.

8. Boiler according to any one of claims 1 to 7, characterized in that it comprises a bottom shaped so as to have a wall (63) sustaining the lower spire of the serpentine and an opening made perpendicularly (62) to the direction of the helical winding of the serpentine at the level of its end section.

9. Boiler according to claim 8, characterized in that the serpentine ends, beyond the opening of the bottom, into a collector (65) secured thereto by removable means (64,67,68).

Fig. 1

Fig. 2

Fig. 3

Fig. 4

Fig. 5

Fig_6

Fig_7

Fig_8